# EUROPEAN PATENT SPECIFICATION

(11) **EP 4 379 948 B1**
(45) Date of publication and mention of the grant of the patent: **03.06.2026**
(21) Application number: 22944043.3
(22) Date of filing: 29.12.2022
(51) Int. Cl.: H01M 50/15, H01M 50/103, H01M 50/593, H01M 50/533, H01M 50/627, H01M 50/157

(54) **LOWER PLASTIC, BATTERY, BATTERY MODULE AND ELECTRIC DEVICE**
UNTERER KUNSTSTOFF, BATTERIE, BATTERIEMODUL UND ELEKTRISCHE VORRICHTUNG
PLASTIQUE INFÉRIEUR, BATTERIE, MODULE DE BATTERIE ET DISPOSITIF ÉLECTRIQUE

(30) Priority: 27.09.2022 CN 202211185639
(43) Date of publication of application: 05.06.2024
(73) Proprietor: Hithium Tech HK Limited, Hong Kong (HK)
(72) Inventor: LIANG, Jinyun, Xiamen, Fujian 361100 (CN); XU, Weidong, Xiamen, Fujian 361100 (CN)
(74) Representative: Manitz Finsterwald Patent- und Rechtsanwaltspartnerschaft mbB
(86) International application number: PCT/CN2022/143209
(87) International publication number: WO 2024/066107

(56) References cited:
- CN-A- 114 497 836
- CN-A- 114 512 748
- CN-A- 115 036 652
- CN-U- 209 401 664
- CN-U- 209 401 756
- CN-U- 212 366 148
- CN-U- 214 153 028
- CN-U- 217 134 507
- JP-A- 2008 192 414
- JP-A- 2011 204 469
- JP-A- 2011 204 469
- US-A1- 2021 119 287

## Description

### RELATED APPLICATION

The present application claims priority to Chinese Patent Application No. 2022111856392, filed on September 27, 2022.

### FIELD

The present disclosure relates to the field of battery technologies, and in particular, to a plastic component, a battery, a battery module, and an electric device.

### BACKGROUND

At present, for a large-size plastic component structure, a strength of the plastic component is often enhanced by increasing its thickness. However, increasing the thickness of the plastic component necessitates a greater quantity of plastic component materials, thereby resulting in escalated production costs. US 20211/19287A1 discloses a secondary battery, a battery module and an electric vehicle.

### SUMMARY

The present disclosure provides a plastic component, a battery, a battery module, and an electric device.

The plastic component according to embodiments of the present disclosure includes a body having a first side surface and a second side surface facing away from the first side surface. The first side surface has a buffer recess recessed towards the second side surface, the buffer recess has at least one flow guide hole penetrating the body in a thickness direction of the body, the second side surface has a connection piece recess recessed towards the first side surface, and the connection piece recess has a pole through hole penetrating the body in the thickness direction of the body. The plastic component satisfies at least one of: condition 1): 1 mm≤c-e≤2 mm and 1 mm≤c-f≤2 mm, where c is a thickness of the body, f is a depth of the buffer recess, e is a depth of the connection piece recess; and condition 2): 1 mm≤p≤2 mm, p= (a-t*g-r*d) /n, where g represents a length of the connection piece recess, t represents a number of the connection piece recesses, r represents a number of the buffer recesses, d represents a length of the buffer recess, a represents a length of the body, and p represents a thickness of each of n side walls arranged in a length direction of the body. The n side walls include a first side wall and a second side wall. The first side wall is a side wall of the connection piece recess away from the buffer recess. The second side wall is a side wall of the connection piece recess close to the buffer recess. A distance between the pole through hole and the first side wall is greater than a distance between the pole through hole and the second side wall.

For the plastic component according to the embodiments of the present disclosure, by defining the buffer recess at the first side surface of the body and defining the connection piece recess at the second side surface, materials used in the plastic component can be reduced and costs can be saved. Moreover, feasibility of injection molding may be assured by satisfying the at least one of condition 1) and condition 2).

According to some embodiments of the present disclosure, projection areas of the connection piece recess and the buffer recess on the body are offset from each other.

According to some embodiments of the present disclosure, the second side surface has two connection piece recesses, and the first side surface has one buffer recess. The two connection piece recesses are located at two ends of the buffer recess, where t=2, r=1, and n=4.

According to some embodiments of the present disclosure, the first side surface is connected to the second side surface through an outer peripheral surface, and the second side surface has a thinned groove having an outer peripheral groove wall and a groove bottom wall. The outer peripheral groove wall is separated from the outer peripheral surface, and the connection piece recess is defined in the groove bottom wall.

According to some embodiments of the present disclosure, the connection piece recess is provided with a positioning protruding post protruding away from the first side surface the positioning protruding post having an end surface flush with the groove bottom wall of the thinned groove.

According to some embodiments of the present disclosure, the body is of a flat plate-like structure and has a length greater than or equal to 300 mm, a width greater than or equal to 100 mm, and a thickness greater than or equal to 4 mm.

According to some embodiments of the present disclosure, the thickness of the body is less than or equal to 30 mm.

According to some embodiments of the present disclosure, the length of the buffer recess is greater than or equal to 285 mm, a width of the buffer recess is greater than or equal to 96 mm, and the depth of the buffer recess is greater than or equal to 2.5 mm.

According to some embodiments of the present disclosure, a dimension of the connection piece recess in a length direction of the body is greater than or equal to 50 mm; a dimension of the connection piece recess in a width direction of the body is greater than or equal to 86 mm; and a depth of the connection piece recess is greater than or equal to 2.5 mm.

According to some embodiments of the present disclosure, the connection piece recess has a rounded corner at a side of the connection piece recess close to the buffer recess. A fillet radius of the rounded corner ranges from 5 mm to 20 mm.

According to some embodiments of the present disclosure, the pole through hole is located at a center of the body in a width direction of the body.

A battery according to another aspect of the embodiments of the present disclosure includes the plastic component according to any one of the above embodiments of the present disclosure.

According to some embodiments of the present disclosure, the battery further includes a cover plate. The cover plate is located at a side of a first side surface of the plastic component and has a liquid injection hole. A projection of the liquid injection hole on the first side surface is located in the buffer recess, and the flow guide hole is offset from the liquid injection hole.

According to some embodiments of the present disclosure, the battery further includes a connection piece and a pole. The pole passes through the pole through hole. The connection piece is located at a side of a second side of the plastic component and includes a pole connection segment and a tab connection segment connected to the pole connection segment. The pole connection segment is located in a connection piece recess and fixedly connected to the pole. The tab connection segment extends from the plastic component, and an angle between the tab connection segment and the pole connection segment ranges from 70° to 110°.

According to some embodiments of the present disclosure, the battery further includes at least one bare cell provided at a side of the pole connection segment facing away from the plastic component. A longitudinal extending direction of the bare cell is consistent with a length direction of the body, a longitudinal end portion of the bare cell is a tab, and the tab is connected to the tab connection segment.

According to some embodiments of the present disclosure, the bare cell has a protrusion protruding towards the plastic component. The protrusion includes a proximal portion and a distal portion, and the proximal portion is closest to the plastic component. A distance between the distal portion and the plastic component is greater than the distance between the proximal portion and the plastic component, and a projection of the flow guide hole on the protrusion is located at the distal portion, or a flow guide hole is offset from the protrusion.

According to some embodiments of the present disclosure, the buffer recess internally has a plurality of flow guide holes penetrating the body in a thickness direction of the body. Each of two sides of the proximal portion has the plurality of flow guide holes.

According to some embodiments of the present disclosure, the battery includes a plurality of bare cells. A flow guide holes is located at a center line between two adjacent bare cells.

A battery module according to another aspect of the embodiments of the present disclosure includes the battery according to any one of the above embodiments of the present disclosure.

An electric device according to another aspect of the embodiments of the present disclosure includes the battery module according to the above embodiments of the present disclosure.

For the battery, the battery module, and the electric device according to the embodiments of the present disclosure, by defining the buffer recess at the first side surface of the body and defining the connection piece recess at the second side surface, the materials used in the plastic component can be reduced and the costs can be saved. Moreover, the feasibility of injection molding may be ensured by satisfying the at least one of condition 1) and condition 2).

The additional aspects and the advantages of the present disclosure will be partially set forth in the following description, and in part will be apparent from the following description, or may be learned by practice of the present disclosure.

### BRIEF DESCRIPTION OF THE DRAWINGS

The above and/or additional embodiments of the present disclosure will become apparent and readily understood from the following description of embodiments in conjunction with the accompanying drawings, in which:
FIG. 1 is a perspective view of a plastic component from a perspective according to an embodiment of the present disclosure.
FIG. 2 is a perspective view of a plastic component from another perspective according to an embodiment of the present disclosure.
FIG. 3 is a top view of a plastic component according to an embodiment of the present disclosure.
FIG. 4 is a cross-sectional view of A-A in FIG. 3.
FIG. 5 is a schematic view of a thickness of a body, a depth of a buffer recess, and a depth of a connection piece recess.
FIG. 6 is a bottom view of a plastic component according to an embodiment of the present disclosure.
FIG. 7 is a schematic view of a thinned groove of a plastic component according to an embodiment of the present disclosure.
FIG. 8 is a bottom view of a plastic component according to another embodiment of the present disclosure.
FIG. 9 is a perspective view of a connection piece.
FIG. 10 is a schematic view of an assembly of a cover plate, a plastic component, a connection piece, and a bare cell.
FIG. 11 is a schematic view of a relative position between a bare cell and a plastic component.

Reference Signs:
plastic component 10, first side surface 1, buffer recess 11, flow guide hole 12, first side wall 13, second side wall 14, third side wall 15, fourth side wall 16, second side surface 2, connection piece recess 21, rounded corner 211, positioning protruding post 212, thinned groove, outer peripheral groove wall 221, groove bottom wall 222, outer peripheral surface 3, pole through hole 4, cover plate 20, liquid injection hole 201, connection piece 30, pole connection segment 301, tab connection segment 302, bare cell 40, tab 401, protrusion 402, proximal portion 4021, distal portion 4022.

### DETAILED DESCRIPTION

Embodiments of the present disclosure will be described in detail below, and examples of the embodiments are shown in the accompanying drawings, in which identical or similar reference signs denote identical or similar elements or elements with identical or similar functions through the accompanying drawings. The following embodiments described with reference to the drawings are illustrative and intended to explain the present disclosure, rather than being interpreted as limitations on the present disclosure.

In description of the present disclosure, it should be understood that orientations or positional relationships indicated by terms "longitudinal", "transverse", "length", "width", "thickness", "upper", "lower", "front", "rear", "left", "right", "vertical", "horizontal", "top", "bottom", "inner", "outer", and the like are based on orientations or positional relationships shown in the drawings, and facilitate the description of the present disclosure and simplify the description merely, rather than indicating or implying that the associated apparatus or element must have specific orientations and are constructed and operated in the specific orientations, and thus should not be construed to limit the present disclosure.

In addition, the terms "first" and "second" are used only for description and shall not be interpreted as an indication or implication of relative importance or an implicit indication of the number of technical features. Thus, features associated with "first" and "second" may include at least one or more such features, either explicitly or implicitly. In the description of the present disclosure, "a plurality of" means two or more, unless otherwise specifically defined.

In the present disclosure, unless otherwise specifically stated and defined, terms "mounted", "connect", "connect to", "fixed", and the like should be understood broadly. For example, it may be a fixed connection, detachable connection, or integrally formed; it may be a mechanical connection, an electric connection, or a communication; it may be a direct connection, an indirect connection through an intermediary, or a communication between the interiors of two elements or mutual acting relationship between the two elements. For those skilled in the art, the specific meaning of the above-mentioned terms in the embodiments of the present disclosure can be understood according to specific circumstances.

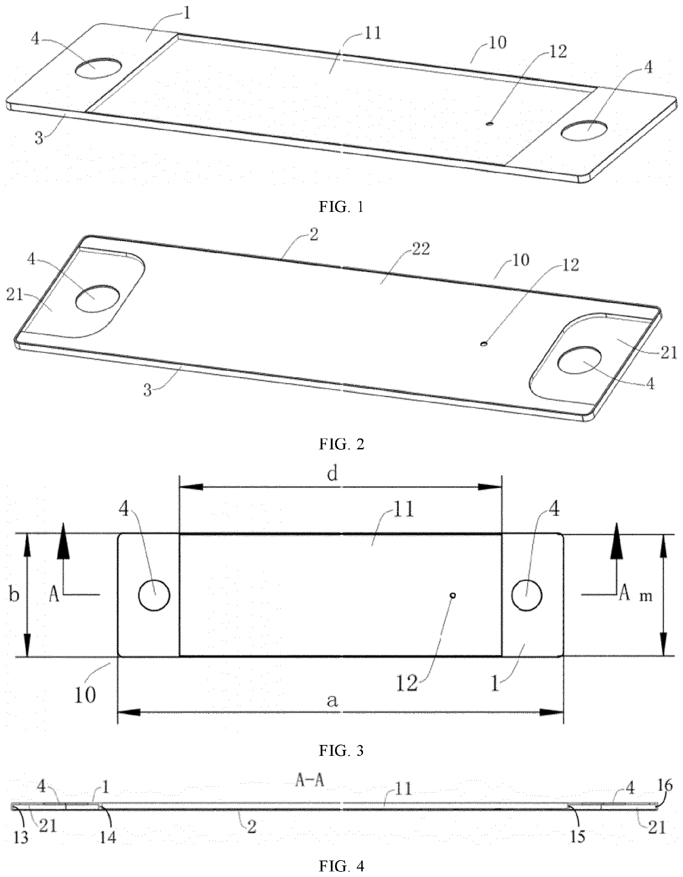

A plastic component 10 according to embodiments of the present disclosure will be described in detail with reference to FIG. 1 to FIG. 11. The plastic component 10 may be used in a battery. The battery includes a housing and a battery top cover. The housing has a receiving space, and the receiving space is provided with a battery cell. The battery top cover is used for sealing an opening of the receiving space. In some embodiments, the plastic component 10 may be formed as a part of the battery top cover.

Referring to FIG. 1 to FIG. 6, the plastic component 10 according to the embodiments of the present disclosure includes a body having a first side surface 1 and a second side surface 2 facing away from the first side surface 1. In some embodiments, with reference to FIG. 1, an upper surface of the body is the first side surface 1, and a lower surface of the body is the second side surface 2.

The first side surface 1 has a buffer recess 11, and the buffer recess 11 is recessed towards the second side surface 2. As illustrated in FIG. 1, the buffer recess 11 is recessed downwards. The buffer recess 11 has at least one flow guide hole 12, and the flow guide hole 12 penetrates the body in a thickness direction of the body. When the plastic component 10 is applied in the battery, an operation of injecting liquid into the battery may be completed through the flow guide hole 12. The buffer recess 11 is used as a buffer area of electrolyte, which may effectively prevent excessive liquid injection pressure from damaging a bare cell in a battery housing. Moreover, the internal pressure of the battery cell can be balanced. A recessed structure of the buffer recess 11 also enhances a mechanical strength of a liquid injection area of the body to some extent.

In some embodiments of the present disclosure, one flow guide hole 12 is provided, thereby facilitating simplification of processing process of the plastic component 10. Moreover, a liquid injection process is easy to manage when a number of the flow guide holes 12 is small.

In some embodiments of the present disclosure, a plurality of flow guide holes 12 is provided, thereby facilitating an improvement in liquid injection efficiency.

The second side surface 2 has a connection piece recess 21, and the connection piece recess 21 is recessed towards a direction where the first side surface 1 is located. When the plastic component 10 is applied in the battery, a connection piece may be at least partially installed and positioned in the connection piece recess 21, thereby facilitating a reduction in an overall thickness of the connection piece after the connection piece is connected to the plastic component 10. In addition, a recessed structure of the connection piece recess 21 strengthens a mechanical strength of a connection piece area of the body to some extent.

According to the present disclosure, the plastic component 10 satisfies at least one of: condition 1: 1 mm≤c-e≤2 mm and 1 mm≤c-f≤2 mm, where c is a thickness of the body, f is a depth of the buffer recess 11, e is a depth of the connection piece recess 21; and condition 2: 1 mm≤p≤2 mm, p= (a-t*g-r*d) /n, where g represents a length of the connection piece recess 21, t represents a number of the connection piece recesses 21, r represents a number of the buffer recesses 11, d represents a length of the buffer recess 11, a represents a length of the body, and p represents a thickness of each of n side walls arranged in a length direction of the body.

For the plastic component 10 according to the above embodiments, by defining the buffer recess 11 at the first side surface 1 of the body and defining the connection piece recess 21 at the second side surface 2, materials used in the plastic component 10 can be reduced and costs can be saved. Moreover, feasibility of injection molding may be guaranteed by satisfying the at least one of condition 1) and condition 2).

In some embodiments, the plastic component 10 is generally manufactured by using injection molding process. The injection molding process has a poor molding effect on an injection molded part with a thickness greater than 2 mm. Moreover, the plastic component longitudinally occupies a large space, which may increase a weight of the battery, resulting in a reduced battery energy density. Conversely, in response that the thickness is less than 1 mm, a requirement for a strength of the injection molded part is not satisfied.

In condition 1), a range of 1 mm≤c-e≤2 mm indicates a distance between a bottom surface of the connection piece recess 21 and the first side surface 1, i.e., a wall thickness of the body at the connection piece recess 21. A range of 1 mm≤c-f≤2 mm represents a distance between a bottom surface of the buffer recess 11 and the second side surface 2, i.e., a wall thickness of the body at the buffer recess 11. On one hand, the feasibility of injection molding may be assured, and a structural strength of the plastic component 10 at the groove is ensured. On the other hand, it can ensure the buffer recess 11 can withstand an impact force of the injected electrolyte and a weight of the accommodated electrolyte, and prevent the buffer recess 11 from being bent and deformed when the battery is exposed to heat or vibration.

In the illustrated implementations, the first side surface 1 has one buffer recess 11, and the second side surface 2 has two connection piece recesses 21. The two connection piece recesses 21 are located at two ends of the buffer recess 11 respectively, allowing t=2, r=1, and n=4. With reference to FIG. 4, in the length direction of the body, four side walls are provided at a bottom of the plastic component10: from left to right, they are respectively referred to as a first side wall 13, a second side wall 14, a third side wall 15, and a fourth side wall 16, i.e., n=4. In condition 2), 1 mm≤p≤2 mm, which ensures feasibility of injection molding for each side wall and guarantees quality of the injection molding. In addition, a thickness of each side wall should satisfy an equation p=(a-2g-d)/4, which guarantees equal thickness for the four side walls. Moreover, a side wall thickness is in a range of 1 mm≤p≤2 mm, which may also ensure the structural strength of the plastic component during assembly or when subjected to vibration. Further, equal thickness among the side walls ensures uniform force distribution on each part of the plastic component and reduces deformation of the plastic component when subjected to force. It can be understood that, in other implementations, t, r, and n may also be other numerical values and may be determined as desired, which is not exemplarily limited herein.

The first side wall 13 is a left side wall of a left connection piece recess 21. The second side wall 14 is a right side wall of the left connection piece recess 21 and a left side wall of the buffer recess 11. The third side wall 15 is a right side wall of the buffer recess 11 and a left side wall of a right connection piece recess 21. The fourth side wall 16 is a right side wall of the right connection piece recess 21.

Through condition 1) and condition 2), a wall thickness between adjacent structures is ensured to be controlled in a range of 1 mm to 2 mm. In a case where the feasibility of injection molding and structural strength are satisfied, a large amount of production materials are also saved.

In some examples, c-e may be 1 mm, 1.1 mm, 1.2 mm, 1.5 mm, 1.7 mm, 1.9 mm, or 2 mm. Certainly, c-e may also be other numerical values between 1 mm and 2 mm, which are not listed here.

In some examples, c-f may be 1 mm, 1.3 mm, 1.4 mm, 1.6 mm, 1.8 mm, or 2 mm. Certainly, c-e may also be other numerical values between 1 mm and 2 mm, which are not listed here.

In some examples, c-e may be equal to c-f, greater than c-f, or less than c-f.

In some examples, p may be 1 mm, 1.1 mm, 1.3 mm, 1.7 mm, 1.9 mm, or 2 mm. Certainly, p may also be other numerical values between 1 mm and 2 mm, which are not listed here.

It can be understood that in other embodiments, the plastic component satisfies one of condition 1) and condition 2).

Referring to FIG. 1 to FIG. 6, a pole through hole 4 is defined in the connection piece recess 21 and penetrates the body in the thickness direction of the body. The pole through hole 4 is used for a pole to pass through, and the connection piece is welded and fixed to the pole.

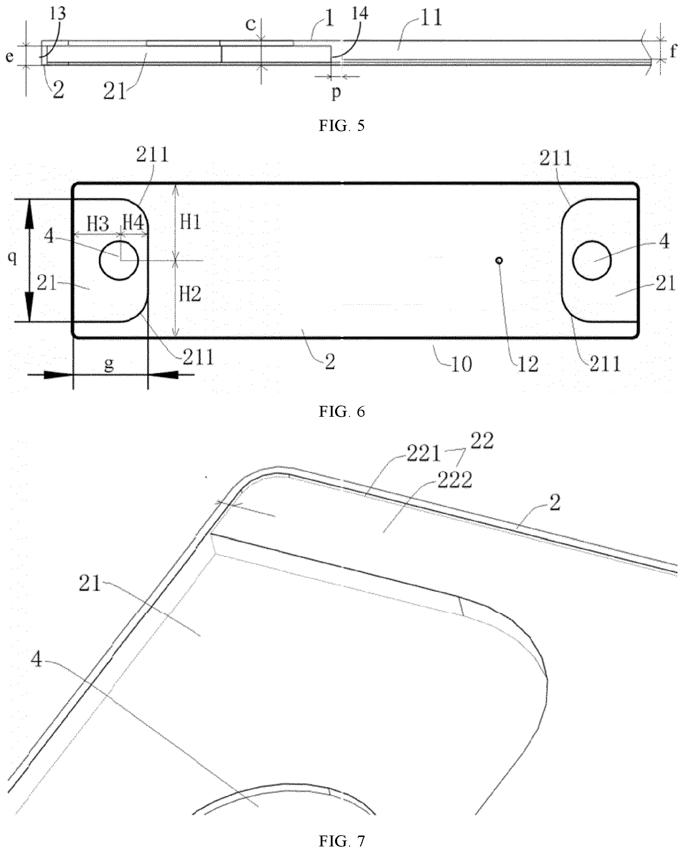

In some embodiments of the present disclosure, referring to FIG. 6, the pole through hole 4 is located at a center of the body in a width direction of the body, i.e., H1=H2. In this way, a structure of the plastic component 10 is an axisymmetric structure. When the plastic component 10 is installed in the battery, the plastic component 10 has no directivity. Moreover, even if the plastic component 10 is horizontally rotated by 180°, the plastic component 10 is still viable, thereby facilitating saving an assembly time.

According to the present disclosure, referring to FIG. 4 to FIG. 6, n side walls include a first side wall 13 and a second side wall 14. The first side wall 13 is a side wall of the connection piece recess 21 away from the buffer recess 11. The second side wall 14 is a side wall of the connection piece recess 21 close to the buffer recess 11. A distance between the pole through hole 4 and the first side wall 13 is greater than a distance between the pole through hole 4 and the second side wall 14. It may be noted that "the distance between the pole through hole 4 and the first side wall 13" refers to a distance between a center of the pole through hole 4 and the first side wall 13, "the distance between the pole through hole 4 and the second side wall 14" refers to a distance between the center of the pole through hole 4 and the second side wall 14, and the distance between the center of the pole through hole 4 and the first side wall 13 is greater than the distance between the center of the pole through hole 4 and the second side wall 14, i.e., H3>H4. In this way, the center of the pole through hole 4 is far away from an edge of the body, which may reduce a hole cracking risk at the pole through hole 4.

With the plastic component 10 according to the embodiments of the present disclosure, the buffer recess 11 is defined at the first side surface 1 of the body, so that the electrolyte may be buffered, and the bare cell in the battery housing may be prevented from being damaged due to excessive liquid injection pressure. Moreover, the material of the body may be decreased. By defining the connection piece recess 21 at the second side surface 2, the overall thickness of the connection piece can be lowed after being connected to the plastic component 10 and further reduce the material of the body. Therefore, the material required for forming the plastic component 10 and the time required for injection molding cooling are saved, which greatly economizes on the cost.

In some embodiments of the present disclosure, projection areas of the connection piece recess 21 and the buffer recess 11 on the body are offset from each other. In this way, the thickness of the body is not excessively reduced, which helps keep the body high in strength.

According to some embodiments of the present disclosure, an offset between the projection area of the connection piece recess 21 on the body and the projection area of the buffer recess 11 on the body ranges from 1 mm to 2 mm. As illustrated in FIG. 5, the offset between the projection area of the connection piece recess 21 on the body and the projection area of the buffer recess 11 on the body is p, i.e., the thickness of the side wall, and p is greater than or equal to 1 mm and less than or equal to 2 mm. When p is less than 1 mm, a connection strength between the connection piece recess 21 and the buffer recess 11 is small, and the body is easy to crack in an area between the connection piece recess 21 and the buffer recess 11; and when p is greater than 2 mm, it will result in significant fluctuations in the thickness of the body, consequently leading to an increased level of injection molding difficulty and a decreased success rate of injection molding. Exemplarily, p may be 1 mm, 1.1 mm, 1.3 mm, 1.7 mm, 1.9 mm, 2 mm, or the like. Certainly, p may also be other numerical values in the range of 1 mm and 2 mm. The enumeration of details shall be eschewed henceforth.

In some embodiments of the present disclosure, referring to FIG. 2, FIG. 4, and FIG. 6, the second side surface 2 has two connection piece recesses 21, and the first side surface 1 has one buffer recess 11. The two connection piece recesses 21 are located at each of two ends of the buffer recess 11. In this way, the connection piece area is offset from a liquid injection buffer area, which is beneficial to reasonably utilizing the space. Moreover, the two connection piece recesses 21 facilitate a connection between the plastic component 10 and the two connection pieces respectively. The recessed structure of the buffer recess 11 enhances a mechanical strength of a middle area of the body to some extent. Moreover, the recessed structure of the connection piece recess 21 strengthens a mechanical strength of areas at the two ends of the body to some extent.

In some embodiments of the present disclosure, referring to FIG. 2 and FIG. 7, the body has a predetermined thickness. The first side surface 1 is connected to the second side surface 2 through an outer peripheral surface 3, and the second side surface 2 has a thinned groove 22 having an outer peripheral groove wall 221 and a groove bottom wall 222. The outer peripheral groove wall 221 is separated from the outer peripheral surface 3, and the connection piece recess 21 is defined in the groove bottom wall 222. By defining the thinned groove 22, a mechanical strength of the second side surface 2 of the body may be enhanced to some extent. The thinned groove 22 may also be used as a hot melting area of a polyester film Mylar. In some embodiments, a top of the polyester film Mylar is disposed in the thinned groove 22, and a connection between the polyester film Mylar and the body is realized through hot melting process.

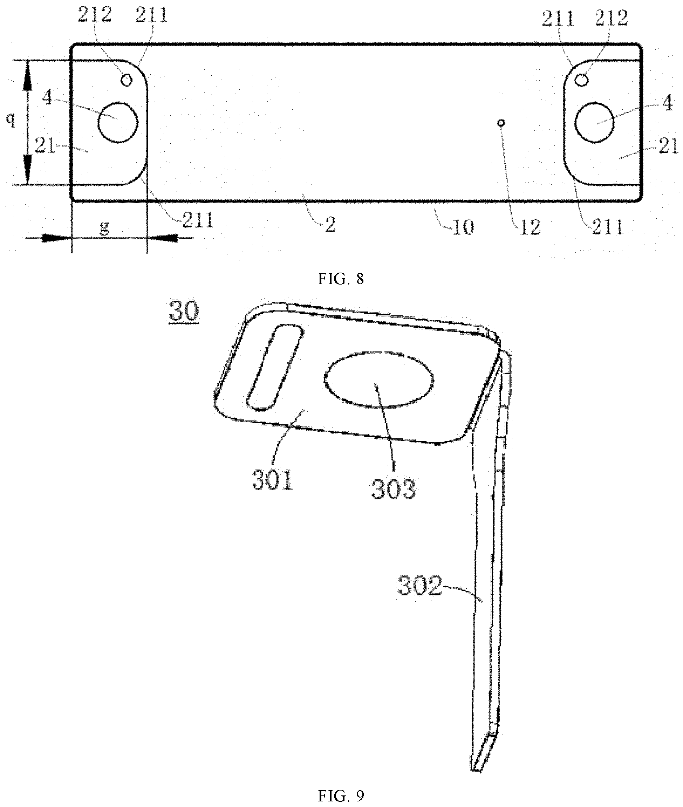

According to some embodiments of the present disclosure, referring to FIG. 8, the connection piece recess 21 is provided with a positioning protruding post 212 protruding away from the first side surface 1. An end surface of the positioning protruding post 212 is flush with the groove bottom wall 222 of the thinned groove 22. The positioning protruding post 212 is offset from the pole through hole 4 and may position the connection piece. For example, the connection piece has a positioning hole, and the positioning protruding post 212 is inserted into the positioning hole. Therefore, positioning of the connection piece in the connection piece recess 21 is realized, thereby facilitating welding and fixing of the connection piece and the pole in the pole through hole 4.

In some embodiments of the present disclosure, the body is of a flat plate-like structure and has a length greater than or equal to 300 mm and a width greater than or equal to 100 mm. In this way, it can be guaranteed that the body is matched with the corresponding battery, preventing negative impact on normal use of the body due to its size being too small. Moreover, the thickness of the body is greater than or equal to 4 mm, which may ensure that the strength of the body is excessively reduced because the thickness of the body is too thin. In some embodiments, referring to FIG. 3 to FIG. 5, the length of the body is a, where a is greater than or equal to 300 mm, a width of the body is b, where b is greater than or equal to 107 mm, and the thickness of the body is c, where c is greater than or equal to 4 mm. Exemplarily, a may be 300 mm, 310 mm, 320 mm, 330 mm, 340 mm, etc., b may be 100 mm, 105 mm, 110 mm, 113 mm, 116 mm, 119 mm, etc., and c may be 4 mm, 6 mm, 8 mm, 10 mm, 12 mm, etc.. Of course, a, b, and c may also be other numerical values greater than their respective lower limit values, which are not exhaustively listed herein.

In some embodiments of the present disclosure, the thickness of the body is less than or equal to 30 mm, which may ensure that the body is thin, thus saving materials. The thin body is beneficial to improving injection molding efficiency of the plastic component 10, as well as increasing a success rate of forming the plastic component 10.

In some embodiments of the present disclosure, the length of the buffer recess 11 is greater than or equal to 285 mm, a width of the buffer recess 11 is greater than or equal to 96 mm, and the depth of the buffer recess 11 is greater than or equal to 2.5 mm. In this way, it can be ensured that the buffer recess 11 is matched with the corresponding battery, with a great area and sufficient depth. The buffer recess 11 can well buffer the liquid during liquid injection, avoiding a case where a size of the buffer recess 11 is too small and affects a buffer effect on the liquid during injection, such as liquid overflow. In some embodiments, referring to FIG. 3 to FIG. 5, the length of the buffer recess 11 is d, where d is greater than or equal to 285 mm. The width of the buffer recess 11 is m, where m is greater than or equal to 96 mm. The depth of the buffer recess 11 is f, and f is greater than or equal to 2.5 mm. Exemplarily, d may be 2 mm, 4 mm, 5 mm, 6 mm, 10 mm, etc., m may be 96 mm, 100 mm, 104 mm, 108 mm, 112 mm, 116 mm, etc., and f may be 2.5 mm, 2.7 mm, 2.9 mm, 3.1 mm, 3.3 mm, etc. Certainly, d, m, and f may also be other numerical values greater than their respective lower limit values, which will not be exhaustively listed here.

In some embodiments of the present disclosure, a dimension of the connection piece recess 21 in the length direction of the body is greater than or equal to 50 mm, a dimension of the connection piece recess 21 in a width direction of the body is greater than or equal to 86 mm, and the depth of the connection piece recess 21 is greater than or equal to 2.5 mm. In this way, it can be ensured that the connection piece recess 21 is matched with the corresponding battery, with the great area and sufficient depth, thereby lowering a connection difficulty when the connection piece recess 21 is connected to the connection piece. In some embodiments, referring to FIG. 5 and FIG. 6, the dimension of the connection piece recess 21 in the length direction of the body is g, where g is greater than or equal to 50 mm. The dimension of the connection piece recess 21 in the width direction of the body is q, where q is greater than or equal to 86 mm. The depth of the connection piece recess 21 is e, and e is greater than or equal to 2.5 mm. Exemplarily, g may be 50 mm, 52 mm, 54 mm, 56 mm, 58 mm, and so on. Similarly, q may be 86 mm, 88 mm, 90 mm, 92 mm, 94 mm, and so forth. Likewise, e may be 2.5 mm, 2.7 mm, 2.9 mm, 3.0 mm, etc. Certainly, g, q, and e may also be other numerical values greater than their respective lower limit values, which will not be exhaustively listed here.

In some embodiments of the present disclosure, referring to FIG. 6, the connection piece recess 21 has a rounded corner 211 at a side of the connection piece recess 21 close to the buffer recess. A fillet radius of the rounded corner 211 ranges from 5 mm to 20 mm. A fillet size of the rounded corner 211 matches an outer dimension of the connection piece, allowing the rounded corner 211 to perform position restriction on the connection piece. In addition, compared with a right angle, the structure of the rounded corner 211 may also alleviate a stress concentration phenomenon at the corner of the connection piece recess 21, avoiding fracture of the plastic component 10.

In some embodiments of the present disclosure, the body may further have a liquid return hole penetrating the body in the thickness direction of the body, allowing the electrolyte at a top of the body to flow back through the liquid return hole when the battery is inverted.

According to the embodiments in another aspect of the present disclosure, a battery includes the plastic component 10 according to the above embodiments.

For the battery according to the embodiments of the present disclosure, by defining the buffer recess 11 at the first side surface 1 of the body and defining the connection piece recess 21 at the second side surface 2, the materials in the plastic component 10 can be reduced and the costs can be saved. Moreover, the feasibility of injection molding may be ensured by satisfying the at least one of condition 1) and condition 2).

In some embodiments of the present disclosure, as illustrated in FIG. 1, FIG. 2, and FIG. 10, the battery further includes a cover plate 20. The cover plate 20 is located at a side of a first side surface 1 of the plastic component 10 and has a liquid injection hole 201. A projection of the liquid injection hole 201 on the first side surface 1 is located in a buffer recess 11, and a flow guide hole 12 is offset from the liquid injection hole 201. In this way, after the electrolyte enters the buffer recess 11 from the liquid injection hole 201, the electrolyte may be fully buffered in the buffer recess 11, and then enter the battery from the flow guide hole 12, thereby reducing an impact force of the electrolyte on an interior of the battery and allowing the liquid injection process to be more stable. As illustrated in FIG. 1 to FIG. 3 and FIG. 6, the flow guide hole 12 is located in the buffer recess 11 and is close to a connection piece recess 21 at a right end. Certainly, in some embodiments not illustrated in the drawings, the flow guide hole 12 may be located in the buffer recess 11 and close to a connection piece recess 21 at a left end, or the flow guide hole 12 may be located at a center position of the buffer recess 11.

In some embodiments of the present disclosure, as illustrated in FIG. 1 and FIG. 2, FIG. 9 and FIG. 10, the battery further includes a connection piece 30 and a pole. The pole passes through the pole through hole 4. The connection piece 30 is located at a side of a second side 2 of the plastic component 10 and includes a pole connection segment 301 and a tab connection segment 302. The pole connection segment 301 is directly connected to the tab connection segment 302, or the pole connection segment 301 is indirectly connected to the tab connection segment 302 through a middle connection segment. The pole connection segment 301 is located in a connection piece recess 21 and fixedly connected to the pole. The tab connection segment 302 extends away from the plastic component 10, and an angle between the tab connection segment 302 and the pole connection segment 301 is in a range of 70° to 110°. The tab connection segment 302 is adapted to be connected to other parts of the battery (for example, the tab 401 of the bare cell 40 mentioned below), and the tab connection segment 302 and the pole connection segment 301 are located in different planes, which facilitates an arrangement of the tab connection segment 302 at a position convenient for a connection operation, and decreases a lateral size of the battery (i.e., a size of the battery in a F1-F2 direction). Exemplarily, the angle between the tab connection segment 302 and the pole connection segment 301 is 90°, i.e., the tab connection segment 302 is perpendicular to the pole connection segment 301.

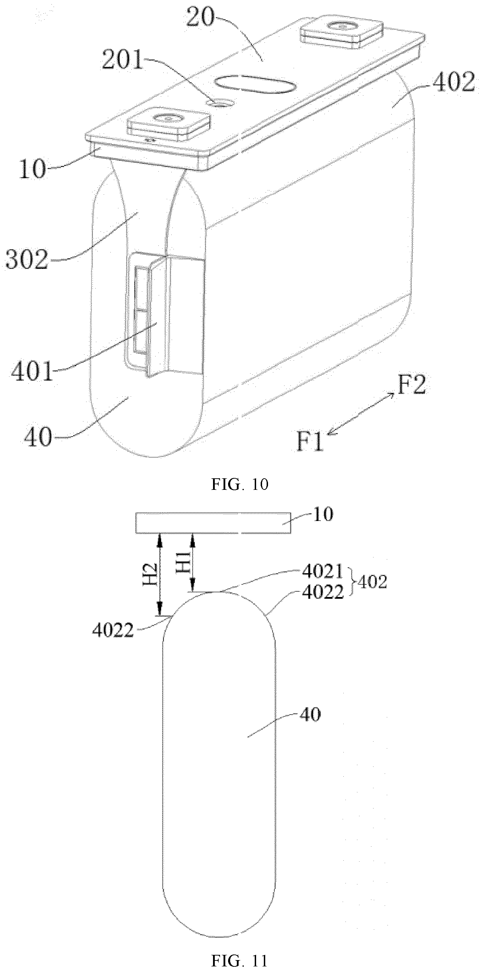

In some embodiments of the present disclosure, as illustrated in FIG. 1 and FIG. 2, FIG. 9 and FIG. 10, the battery further includes at least one bare cell 40 provided at a side of the pole connection segment 301 facing away from the plastic component 10. A longitudinal extending direction of the bare cell 40 is consistent with a length direction of a body. A longitudinal end portion of the bare cell 40 is a tab 401, and the tab 401 is connected to the tab connection segment 302. The length direction of the body is the F1-F2 direction illustrated in FIG. 10, and the longitudinal extending direction of the bare cell 40 is consistent with the length direction of the body, allowing a distance between a plane area of sidewall surface of the bare cell 40 and the flow guide hole 12 on the body to be small. In this way, when the electrolyte enters the battery through the flow guide hole 12, the electrolyte may be in contact with the plane area of sidewall surface of the bare cell 40 more effectively and quickly, thus facilitating faster soak of the bare cell 40 and shortening the idle time. In addition, the tab 401 is located at a side surface, which is convenient for a connection between the tab 401 and the tab connection segment 302.

FIG. 11 is a schematic diagram of a relative position of a bare cell 40 and a plastic component 10 in a cross-section perpendicular to the F1-F2 direction in FIG. 10. In some embodiments of the present disclosure, as illustrated in FIG. 1 and FIG. 2, FIG. 10 and FIG. 11, the bare cell 40 has a protrusion 402 protruding towards the plastic component 10. The protrusion 402 includes a proximal portion 4021 and a distal portion 4022, and the proximal portion 4021 is closest to the plastic component 10. A distance between the distal portion 4022 and the plastic component 10 is greater than the distance between the proximal portion 4021 and the plastic component 10. As illustrated in FIG. 11, the distance between the proximal portion 4021 and the plastic component 10 is H1, the distance between the distal portion 4022 and the plastic component 10 is H2, and H2>H1. The proximal portion 4021 is the nearest position of the bare cell 40 from the plastic component 10, which is the highest point of the bare cell 40. A predetermined space is defined between the protrusion 402 and the plastic component 10, which may reduce obstruction of the electrolyte when passing through the space, and facilitate downward flow and diffusion of the electrolyte.

In an example, an outer surface of the protrusion 402 may be constructed as a semicylindrical surface, such that the proximal portion 4021 is a generating line of the semicylindrical surface.

In some embodiments, the projection of the flow guide hole 12 on the protrusion 402 is located at the distal portion 4022. In this way, when the electrolyte enters the interior of the battery through the flow guide hole 12, the electrolyte directly drops on the distal portion 4022 instead of the proximal portion 4021, and the distal portion 4022 can guide the electrolyte faster to a side surface space of the bare cell 40.

Alternatively, in other embodiments, the flow guide hole 12 is offset from the protrusion 402, i.e., the flow guide hole 12 directly faces towards the side surface space of the bare cell 40, and the electrolyte may directly enter the side surface space of the bare cell 40 through the flow guide hole 12.

In some embodiments of the present disclosure, the buffer recess 11 internally has a plurality of flow guide holes 12 penetrating the body in a thickness direction of the body. Each of two sides of the proximal portion 4021 has the plurality of flow guide holes 12. The plurality of flow guide holes 12 may disperse the electrolyte, thereby reducing the impact force on the bare cell 40 and improving the liquid injection efficiency of the battery. In addition, a soaking speed of the electrolyte on the bare cell 40 is enhanced, and the idle time is reduced.

In an example, two flow guide holes 12 are provided and disposed on the distal portions 4022 at two sides of the proximal portion 4021, respectively. Alternatively, in another example, the two flow guide holes 12 may be provided and disposed at two sides of the bare cell 40, respectively.

In other embodiments of the present disclosure, one flow guide hole 12 is provided.

In some embodiments of the present disclosure, the battery includes a plurality of bare cells 40. A flow guide hole 12 is located at a center line between two adjacent bare cells 40. In this way, a space below the flow guide hole 12 is great, and the obstruction to the electrolyte may be decreased.

A battery module according to the embodiments in another aspect of the present disclosure includes the battery according to any one of the above embodiments.

For the battery module according to the embodiments of the present disclosure, the buffer recess 11 is defined at the first side surface 1 of the body, and the connection piece recess 21 is defined at the second side surface 2 of the body, which may reduce the materials used in the plastic component 10 and save the costs. Moreover, the feasibility of injection molding may be ensured by satisfying the at least one of condition 1) and condition 2).

In some embodiments, one battery module may include one or more batteries. The plurality of batteries is electrically connected to each other in a series, parallel, or series-parallel manner. The term plurality may refer to two or more.

An electric device according to another embodiment of the present disclosure includes the battery module according to the above embodiments.

For the electric device according to the embodiments of the present disclosure, by defining the buffer recess 11 at the first side surface 1 of the body and the connection piece recess 21 at the second side surface 2, the materials in the plastic component 10 can be reduced and the costs can be saved. Moreover, the feasibility of injection molding may be ensured by satisfying the at least one of condition 1) and condition 2).

In some embodiments, the electric device may include one or more battery modules. The plurality of battery modules may be electrically connected to each other in series, parallel, or series-parallel connection.

An electric device includes, but is not limited to, an energy storage device and a vehicle. The energy storage device may be an energy storage container. The energy storage container includes a box body and a battery cluster disposed in the box body. The battery cluster includes a cluster frame and a plurality of battery packs, and the plurality of battery modules is installed on the cluster frame. The energy storage device may also be a household energy storage cabinet.

The battery module may be applied in the vehicle as a power battery pack. The Vehicle includes, but is not limited to, a pure electric vehicle, a hybrid vehicle, an extended-range electric vehicles, and the like.

In descriptions of this specification, descriptions in the reference terms "an embodiment", "some embodiments", "example", "specific example", "some examples" or the like mean that the specific features, structures, materials or characteristics described in combination with the embodiments or the examples are included in at least one embodiment or example of the present disclosure. In the present specification, the schematic representation of the above terms does not necessarily mean the same embodiment or example. Moreover, the described specific features, structures, materials or characteristics may be combined in any one or more embodiments or examples in a suitable mode. In addition, various embodiments or examples described in the specification, as well as features of various embodiments or examples, may be combined by those skilled in the art.

## Claims

1. A plastic component, comprising a body having a first side surface (1) and a second side surface (2) facing away from the first side surface (1), the first side surface (1) having a buffer recess (11) recessed towards the second side surface (2), the buffer recess (11) having at least one flow guide hole (12) penetrating the body in a thickness direction of the body, the second side surface (2) having at least one connection pieces recess (21) recessed towards the first side surface (1), each of the at least one connection piece recess (21) having a pole through hole (4) penetrating the body in the thickness direction of the body,
**characterized in that** the plastic component satisfies at least one of:
condition 1): 1 mm≤c-e≤2 mm and 1 mm≤c-f≤2 mm, where c represents a thickness of the body, f represents a depth of the buffer recess (11), e represents a depth of the connection piece recess (21); and
condition 2): 1 mm≤p≤2 mm, p= (a-t*g-r*d) /n, where g represents a length of the connection piece recess (21), t represents a number of the connection piece recesses (21), r represents a number of the buffer recesses (11), d represents a length of the buffer recess (11), a represents a length of the body, and p represents a thickness of each of n side walls arranged in a length direction of the body,
wherein the n side walls comprise a first side wall (13) and a second side wall (14), the first side wall (13) being a side wall of the connection piece recess (21) away from the buffer recess (11), the second side wall (14) being a side wall of the connection piece recess (21) close to the buffer recess (11), a distance between the pole through hole (4) and the first side wall (13) being greater than a distance between the pole through hole (4) and the second side wall (14).

2. The plastic component according to claim 1, wherein:
a projection region of the connection piece recess (21) on the body and a projection region of the buffer recess (11) on the body are offset from each other; and/or
the at least one connection piece recess (21) comprises two connection piece recesses (21), and the first side surface (1) has one buffer recess (11), the two connection piece recesses (21) being located at two ends of the buffer recess (11) respectively, where t=2, r=1, and n=4.

3. The plastic component according to any one of claims 1 to 2, wherein:
the first side surface (1) is connected to the second side surface (2) through an outer peripheral surface (3); and
the second side surface (2) has a thinned groove (22) having an outer peripheral groove wall (221) and a groove bottom wall (222), the outer peripheral groove wall (221) being separated from the outer peripheral surface (3), and the connection piece recess (21) being formed at the groove bottom wall (222).

4. The plastic component according to claim 3, wherein the connection piece recess (21) is provided with a positioning protruding post (212) protruding away from the first side surface (1), the positioning protruding post (212) having an end surface flush with the groove bottom wall (222) of the thinned groove (22).

5. The plastic component according to any one of claims 1 to 4, wherein the body is of a flat plate-like structure, and has a length greater than or equal to 300 mm, a width greater than or equal to 100 mm, and a thickness greater than or equal to 4 mm,
optionally, the thickness of the body is less than or equal to 30 mm.

6. The plastic component according to any one of claims 1 to 5, wherein:
the length of the buffer recess (11) is greater than or equal to 285 mm, a width of the buffer recess (11) is greater than or equal to 96 mm, and the depth of the buffer recess (11) is greater than or equal to 2.5 mm; and/or
a dimension of the connection piece recess (21) in a length direction of the body is greater than or equal to 50 mm, a dimension of the connection piece recess (21) in a width direction of the body is greater than or equal to 86 mm, and a depth of the connection piece recess (21) is greater than or equal to 2.5 mm.

7. A battery, comprising the plastic component according to any one of claims 1 to 6.

8. The battery according to claim 7, further comprising a cover plate (20) located at a side of the first side surface (1) of the plastic component and having a liquid injection hole (201), a projection of the liquid injection hole (201) on the first side surface (1) being located at the buffer recess (11), and the at least one flow guide hole (12) being offset from the liquid injection hole (201).

9. The battery according to claim 7 or 8, further comprising a connection piece (30) and a pole, the pole passing through the pole through hole (4), the connection sheet (30) being located at a side of the second side surface (2) of the plastic component and comprising a pole connection segment (301) and a tab connection segment (302) connected to the pole connection segment (301), the pole connection segment (301) being located at the connection piece recess (21) and fixedly connected to the pole, the tab connection segment (302) extending away from the plastic component, and an angle between the tab connection segment (302) and the pole connection segment (301) being greater than 70° and less than 110°.

10. The battery according to claim 9, further comprising at least one bare cell (40) arranged at a side of the pole connection segment (301) facing away from the plastic component, a longitudinal extending direction of the at least one bare cell (40) being consistent with a length direction of the body, and a longitudinal end of the at least one bare cell (40) being a tab (401) connected to the tab connection segment (302),
optionally, the at least one bare cell (40) has a protrusion (402) protruding towards the plastic component, the protrusion (402) comprising a proximal portion and a distal portion, the proximal portion being closest to the plastic component, a distance between the distal portion and the plastic component being greater than a distance between the proximal portion and the plastic component, and a projection of the flow guide hole (12) on the protrusion (402) being located at the distal portion, or the flow guide hole (12) being offset from the protrusion (402).

11. The battery according to claim 10, wherein the buffer recess (11) internally has a plurality of flow guide holes (12) penetrating the body in a thickness direction of the body and being formed at two sides of the proximal portion.

12. The battery according to claim 10 or 11, wherein the at least one bare cell (40) comprises a plurality of bare cells (40), the flow guide hole (12) being located at a center line between two adjacent bare cells (40).

13. A battery module, comprising the battery according to any one of claims 7 to 12.

14. An electric device, comprising the battery module according to claim 13.

## Patentansprüche

1. Kunststoffbauteil, umfassend einen Körper mit einer ersten Seitenfläche (1) und einer zweiten Seitenfläche (2), die von der ersten Seitenfläche (1) abgewandt ist, wobei die erste Seitenfläche (1) eine Pufferaussparung (11) aufweist, die zur zweiten Seitenfläche (2) hin vertieft ist, wobei die Pufferaussparung (11) mindestens eine Strömungsführungsbohrung (12) aufweist, die den Körper in einer Dickenrichtung des Körpers durchdringt, wobei die zweite Seitenfläche (2) mindestens eine Anschlussstückaussparung (21) aufweist, die zur ersten Seitenfläche (1) hin vertieft ist, wobei jede der mindestens einen Anschlussstückaussparungen (21) eine Poldurchgangsbohrung (4) aufweist, die den Körper in der Dickenrichtung des Körpers durchdringt, und wobei das Kunststoffbauteil mindestens eine der folgenden Bedingungen erfüllt:
Bedingung 1): 1 mm ≤ c - e ≤ 2 mm und 1 mm ≤ c - f ≤ 2 mm, wobei c eine Dicke des Körpers darstellt, f eine Tiefe der Pufferaussparung (11) darstellt, e eine Tiefe der Anschlussstückaussparung (21) darstellt;
Bedingung 2): 1 mm≤p≤2 mm, p=(a-t*g-r*d)/n, wobei g eine Länge der Anschlussstückaussparung (21) darstellt, t eine Anzahl der Anschlussstückaussparungen (21) darstellt, r eine Anzahl der Pufferaussparungen (11) darstellt, d eine Länge der Pufferaussparung (11) darstellt, a eine Länge des Körpers darstellt und p eine Dicke jeder der n Seitenwände darstellt, die in Längsrichtung des Körpers angeordnet sind,
wobei die n Seitenwände eine erste Seitenwand (13) und eine zweite Seitenwand (14) umfassen, wobei die erste Seitenwand (13) eine von der Pufferaussparung (11) abgewandte Seitenwand der Anschlussstückaussparung (21) ist, die zweite Seitenwand (14) eine der Pufferaussparung (11) zugewandte Seitenwand der Anschlussstückaussparung (21) ist, wobei ein Abstand zwischen der Poldurchgangsbohrung (4) und der ersten Seitenwand (13) größer ist als ein Abstand zwischen der Poldurchgangsbohrung (4) und der zweiten Seitenwand (14).

2. Kunststoffbauteil nach Anspruch 1, wobei:
ein Projektionsbereich der Anschlussstü ckaussparung (21) auf dem Körper und ein Projektionsbereich der Pufferaussparung (11) auf dem Körper zueinander versetzt sind; und/oder
die mindestens einen Anschlussstückaussparung (21) zwei Anschlussstückaussparungen (21) umfasst, und die erste Seitenfläche (1) eine Pufferaussparung (11) aufweist, wobei sich die zwei Anschlussstückaussparungen (21) an zwei Enden der Pufferaussparung (11) befinden, wobei t=2, r=1 und n=4.

3. Kunststoffbauteil nach einem der Ansprüche 1 bis 2, wobei:
die erste Seitenfläche (1) mit der zweiten Seitenfläche (2) durch eine Außenumfangsfläche (3) verbunden ist; und
die zweite Seitenfläche (2) eine ausgedünnte Nut (22) mit einer Außenumfangsnutwand (221) und einer Nutbodenwand (222) hat, wobei die Außenumfangsnutwand (221) von der Außenumfangsfläche (3) getrennt ist, und die Anschlussstückaussparung (21) an der Nutbodenwand (222) ausgebildet ist.

4. Kunststoffbauteil nach Anspruch 3, wobei die Anschlussstückaussparung (21) mit einem Positionierungsvorsprungspfosten (212) versehen ist, der von der ersten Seitenfläche (1) weg vorsteht, wobei der Positionierungsvorsprungspfosten (212) eine Endfläche aufweist, die bündig mit der Nutbodenwand (222) der ausgedünnten Nut (22) ist.

5. Kunststoffbauteil nach einem der Ansprüche 1 bis 4, wobei der Körper eine flache plattenartige Struktur aufweist und eine Länge von mindestens 300 mm, eine Breite von mindestens 100 mm und eine Dicke von mindestens 4 mm hat,
wobei wahlweise die Dicke des Körpers kleiner oder gleich 30 mm ist.

6. Kunststoffbauteil nach einem der Ansprüche 1 bis 5, wobei:
die Länge der Pufferaussparung (11) mindestens 285 mm beträgt, die Breite der Pufferaussparung (11) mindestens 96 beträgt mm und die Tiefe der Pufferaussparung (11) mindestens 2,5 mm beträgt; und/oder
eine Abmessung der Anschlussstückaussparung (21) in einer Längsrichtung des Körpers mindestens 50 mm beträgt, eine Abmessung der Anschlussstückaussparung (21) in einer Breitenrichtung des Körpers mindestens 86 mm beträgt und eine Tiefe der Anschlussstückaussparung (21) mindestens 2,5 mm beträgt.

7. Batterie, umfassend das Kunststoffbauteil nach einem der Ansprüche 1 bis 6.

8. Batterie nach Anspruch 7, ferner umfassend eine Abdeckplatte (20), die an einer Seite der ersten Seitenfläche (1) des Kunststoffbauteils angeordnet ist und eine Flüssigkeitseinfüllöffnung (201) aufweist, wobei eine Projektion der Flüssigkeitseinfüllöffnung (201) auf der ersten Seitenfläche (1) in der Pufferaussparung (11) fällt und die mindestens eine Strömungsführungsbohrung (12) gegenüber der Flüssigkeitseinfüllöffnung (201) versetzt ist.

9. Batterie nach Anspruch 7 oder 8, weiter umfassend ein Anschlussstück (30) und einen Pol, wobei der Pol durch die Poldurchgangsbohrung (4) verläuft, wobei das Anschlussstück (30) auf einer Seite der zweiten Seitenfläche (2) des Kunststoffbauteils angeordnet ist und einen Polverbindungsabschnitt (301) sowie einen mit dem Polverbindungsabschnitt (301) verbundenen Laschenverbindungsabschnitt (302) aufweist, wobei der Polverbindungsabschnitt (301) an der Anschlussstückaussparung (21) angeordnet und fest mit dem Pol verbunden ist, wobei sich der Laschenverbindungsabschnitt (302) vom Kunststoffbauteil weg erstreckt, und ein Winkel zwischen dem Laschenverbindungsabschnitt (302) und dem Polverbindungsabschnitt (301) größer als 70° und kleiner als 110° ist.

10. Batterie nach Anspruch 9, weiter umfassend mindestens eine Einzelzelle (40), die auf einer Seite des Polverbindungsabschnitts (301) angeordnet ist, die von dem Kunststoffbauteil abgewandt ist, wobei die längs verlaufende Richtung der mindestens einen Einzelzelle (40) mit einer Längsrichtung des Körpers übereinstimmt und ein Längsende der mindestens einen Einzelzelle (40) eine Lasche (401) ist, die mit dem Laschenverbindungsabschnitt (302) verbunden ist,
wobei wahlweise die mindestens eine Einzelzelle (40) einen in Richtung des Kunststoffbauteils vorstehenden Vorsprung (402) aufweist, wobei der Vorsprung (402) einen proximalen Abschnitt und einen distalen Abschnitt umfasst, wobei der proximale Abschnitt dem Kunststoffbauteil am nächsten liegt, wobei ein Abstand zwischen dem distalen Abschnitt und dem Kunststoffbauteil größer ist als ein Abstand zwischen dem proximalen Abschnitt und dem Kunststoffbauteil, und wobei eine Projektion der Strömungsführungsbohrung (12) auf den Vorsprung (402) am distalen Abschnitt liegt oder die Strömungsführungsbohrung (12) vom Vorsprung (402) versetzt ist.

11. Batterie nach Anspruch 10, wobei die Pufferaussparung (11) im Inneren eine Vielzahl von Strömungsführungsbohrungen (12) aufweist, die den Körper in einer Dickenrichtung des Körpers durchdringen und an zwei Seiten des proximalen Abschnitts ausgebildet sind.

12. Batterie nach Anspruch 10 oder 11, wobei die wenigstens eine Einzelzelle (40) mehrere Einzelzellen (40) umfasst, wobei sich die Strömungsführungsbohrung (12) auf einer Mittellinie zwischen zwei benachbarten Einzelzellen (40) befindet.

13. Batteriemodul, umfassend die Batterie nach einem der Ansprüche 7 bis 12.

14. Elektrische Vorrichtung, umfassend das Batteriemodul nach Anspruch 13.

## Revendications

1. Un composant en plastique, comprenant un corps ayant une première surface latérale (1) et une seconde surface latérale (2) tournée à l'opposé de la première surface latérale (1), la première surface latérale (1) ayant un évidement tampon (11) en retrait vers la seconde surface latérale (2), l'évidement tampon (11) ayant au moins un trou de guidage d'écoulement (12) traversant le corps dans une direction de l'épaisseur du corps, la seconde surface latérale (2) ayant au moins un évidement de pièce de connexion (21) en retrait vers la première surface latérale (1), chacun dudit au moins un évidement de pièce de connexion (21) ayant un trou de passage de pôle (4) traversant le corps dans la direction de l'épaisseur du corps,
**caractérisé en ce que** le composant en plastique satisfait à au moins l'une des conditions suivantes :
condition 1) : 1 mm≤c-e≤2 mm et 1 mm≤c-f≤2 mm, où c représente une épaisseur du corps, f représente une profondeur de l'évidement tampon (11), e représente une profondeur de l'évidement de pièce de connexion (21) ; et
condition 2) : 1 mm≤p≤2 mm, p=(a-t*g-r*d)/n, où g représente une longueur de l'évidement de pièce de connexion (21), t représente un nombre des évidements de pièce de connexion (21), r représente un nombre des évidements tampons (11), d représente une longueur de l'évidement tampon (11), a représente une longueur du corps, et p représente une épaisseur de chacune de n parois latérales agencées dans une direction de la longueur du corps,
dans laquelle les n parois latérales comprennent une première paroi latérale (13) et une seconde paroi latérale (14), la première paroi latérale (13) étant une paroi latérale de l'évidement de pièce de connexion (21) éloignée de l'évidement tampon (11), la seconde paroi latérale (14) étant une paroi latérale de l'évidement de pièce de connexion (21) proche de l'évidement tampon (11), une distance entre le trou de passage de pôle (4) et la première paroi latérale (13) étant supérieure à une distance entre le trou de passage de pôle (4) et la seconde paroi latérale (14).

2. Le composant en plastique selon la revendication 1, dans lequel :
une région de projection de l'évidement de pièce de connexion (21) sur le corps et une région de projection de l'évidement tampon (11) sur le corps sont décalées l'une par rapport à l'autre ; et/ou
ledit au moins un évidement de pièce de connexion (21) comprend deux évidements de pièce de connexion (21), et la première surface latérale (1) a un évidement tampon (11), les deux évidements de pièce de connexion (21) étant situés à deux extrémités de l'évidement tampon (11) respectivement, où t=2, r=1 et n=4.

3. Le composant en plastique selon l'une quelconque des revendications 1 à 2, dans lequel :
la première surface latérale (1) est connectée à la seconde surface latérale (2) par l'intermédiaire d'une surface périphérique extérieure (3) ; et
la seconde surface latérale (2) a une rainure amincie (22) ayant une paroi de rainure périphérique externe (221) et une paroi de fond de rainure (222), la paroi de rainure périphérique externe (221) étant séparée de la surface périphérique extérieure (3), et l'évidement de pièce de connexion (21) étant formé au niveau de la paroi de fond de rainure (222).

4. Le composant en plastique selon la revendication 3, dans lequel l'évidement de pièce de connexion (21) est pourvu d'un montant saillant de positionnement (212) faisant saillie en s'éloignant de la première surface latérale (1), le montant saillant de positionnement (212) ayant une surface d'extrémité au ras de la paroi de fond de rainure (222) de la rainure amincie (22).

5. Le composant en plastique selon l'une quelconque des revendications 1 à 4, dans lequel le corps est d'une structure en forme de plaque plate, et a une longueur supérieure ou égale à 300 mm, une largeur supérieure ou égale à 100 mm et une épaisseur supérieure ou égale à 4 mm,
facultativement, l'épaisseur du corps est inférieure ou égale à 30 mm.

6. Le composant en plastique selon l'une quelconque des revendications 1 à 5, dans lequel :
la longueur de l'évidement tampon (11) est supérieure ou égale à 285 mm, une largeur de l'évidement tampon (11) est supérieure ou égale à 96 mm, et la profondeur de l'évidement tampon (11) est supérieure ou égale à 2,5 mm ; et/ou
une dimension de l'évidement de pièce de connexion (21) dans une direction de la longueur du corps est supérieure ou égale à 50 mm, une dimension de l'évidement de pièce de connexion (21) dans une direction de la largeur du corps est supérieure ou égale à 86 mm, et une profondeur de l'évidement de pièce de connexion (21) est supérieure ou égale à 2,5 mm.

7. Une batterie, comprenant le composant plastique selon l'une quelconque des revendications 1 à 6.

8. La batterie selon la revendication 7, comprenant en outre une plaque de recouvrement (20) située d'un côté de la première surface latérale (1) du composant en plastique et ayant un trou d'injection de liquide (201), une projection du trou d'injection de liquide (201) sur la première surface latérale (1) étant située au niveau de l'évidement tampon (11), et ledit au moins un trou de guidage d'écoulement (12) étant décalé par rapport au trou d'injection de liquide (201).

9. La batterie selon la revendication 7 ou 8, comprenant en outre une pièce de connexion (30) et un pôle, le pôle passant à travers le trou de passage de pôle (4), la feuille de connexion (30) étant située d'un côté de la seconde surface latérale (2) du composant en plastique et comprenant un segment de connexion de pôle (301) et un segment de connexion de languette (302) connecté au segment de connexion de pôle (301), le segment de connexion de pôle (301) étant situé au niveau de l'évidement de pièce de connexion (21) et connecté de manière fixe au pôle, le segment de connexion de languette (302) s'étendant en s'éloignant du composant en plastique, et un angle entre le segment de connexion de languette (302) et le segment de connexion de pôle (301) étant supérieur à 70° et inférieur à 110°.

10. La batterie selon la revendication 9, comprenant en outre au moins une cellule nue (40) agencée d'un côté du segment de connexion de pôle (301) tourné à l'opposé du composant en plastique, une direction d'extension longitudinale de ladite au moins une cellule nue (40) étant cohérente avec une direction de la longueur du corps, et une extrémité longitudinale de ladite au moins une cellule nue (40) étant une languette (401) connectée au segment de connexion de languette (302),
facultativement, ladite au moins une cellule nue (40) a une saillie (402) faisant saillie vers le composant en plastique, la saillie (402) comprenant une partie proximale et une partie distale, la partie proximale étant la plus proche du composant en plastique, une distance entre la partie distale et le composant en plastique étant supérieure à une distance entre la partie proximale et le composant en plastique, et une projection du trou de guidage d'écoulement (12) sur la saillie (402) étant située au niveau de la partie distale, ou le trou de guidage d'écoulement (12) étant décalé par rapport à la saillie (402).

11. La batterie selon la revendication 10, dans laquelle l'évidement tampon (11) a intérieurement une pluralité de trous de guidage d'écoulement (12) traversant le corps dans une direction de l'épaisseur du corps et étant formés des deux côtés de la partie proximale.

12. La batterie selon la revendication 10 ou 11, dans laquelle ladite au moins une cellule nue (40) comprend une pluralité de cellules nues (40), le trou de guidage d'écoulement (12) étant situé au niveau d'une ligne médiane entre deux cellules nues (40) adjacentes.

13. Un module de batterie, comprenant la batterie selon l'une quelconque des revendications 7 à 12.

14. Un dispositif électrique, comprenant le module de batterie selon la revendication 13.
